# EUROPÄISCHE PATENTSCHRIFT

(11) **EP 2 032 295 B1**
(45) Veröffentlichungstag und Bekanntmachung des Hinweises auf die Patenterteilung: **27.01.2010**
(21) Anmeldenummer: 07729731.5
(22) Anmeldetag: 31.05.2007
(51) Int. Cl.: B23B 31/06, B23B 31/00, B23B 31/107, B23Q 11/10, F16D 1/06

(54) **TRENNSTELLE ZWISCHEN ZWEI TEILELEMENTEN EINES DREHENDEN WERKZEUGSYSTEMS**
JUNCTION BETWEEN TWO COMPONENTS OF A ROTATING TOOL SYSTEM
POINT DE SÉPARATION ENTRE DEUX ÉLÉMENTS PARTIELS D'UN SYSTÈME D'OUTIL ROTATIF

(30) Priorität: 19.06.2006 DE 102006028373
(43) Veröffentlichungstag der Anmeldung: 11.03.2009
(73) Patentinhaber: Komet Group GmbH, 74354 Besigheim (DE)
(72) Erfinder: KRETZSCHMANN, Uwe, 74354 Besigheim (DE); KRUSZYNSKI, Jacek, 70190 Stuttgart (DE); SPORS, Benno, 71672 Marbach (DE); BIERL, Wolfgang, 74363 Güglingen (DE)
(74) Vertreter: Wolf, Eckhard
(86) Internationale Anmeldenummer: PCT/EP2007/055328
(87) Internationale Veröffentlichungsnummer: WO 2007/147711

(56) Entgegenhaltungen:
- EP-A1- 0 026 751
- EP-A1- 0 463 422
- EP-A2- 0 285 704
- EP-A2- 0 340 026
- US-A- 4 577 875

## Beschreibung

Die Erfindung bezieht sich auf ein um eine Drehachse drehendes Werkzeugsystem mit einer Trennstelle zwischen zwei Teilelementen für den Einsatz in Werkzeugmaschinen, mit einer an einem ersten Teilelement angeordneten, zur Drehachse koaxialen, zumindest partiell konischen Aufnahme, die von einer ringförmigen Stirnfläche begrenzt ist, mit einer an einem zweiten Teilelement angeordneten Kupplungspartie, die einen Kupplungszapfen mit einer zur konischen Aufnahme komplementäre Kegelfläche und eine zur ringförmigen Stirnfläche weisende, in gekuppeltem Zustand gegen diese anliegende ringförmige Planfläche aufweist, mit einem über das freie Ende des Kupplungszapfens axial überstehenden Zugbolzen, der in gekuppeltem Zustand in einen sich an die Aufnahme anschließenden Hohlraum eingreift, und mit von der Außenseite her betätigbaren Spannmitteln zum gegenseitigen Verspannen der Teilelemente, die zwei im ersten Teilelement radial geführte Spannelemente aufweisen, die einander bezüglich der Drehachse gegenüberliegend angeordnet sind und in einer Spannstellung eine zur Drehachse konzentrische Konuspartie des Zugbolzens untergreifende Keilflächen tragen, und die in Wirkverbindung mit gemeinsamen Betätigungsmitteln stehen, durch die sie zwischen einer Lösestellung und einer Spannstellung verstellbar sind. Als erstes Teilelement mit einer Aufnahme kommen dabei insbesondere Werkzeugspindeln, Werkzeugadapter oder auch Werkzeughalter in Betracht, während als zweite Teilelemente vor allem Werkzeugköpfe, Werkzeughalter oder Schneidenträger in Betracht kommen.

Drehende Werkzeugsysteme mit Trennstellen dieser Art sind bekannt (DE-C-37 11 808). Ihr Vorteil besteht darin, dass trotz des für die Verspannung der Teilelemente vorgesehen axial ausgerichteten Zugbolzens eine radiale Betätigung möglich ist. Es hat sich jedoch gezeigt, dass aufgrund der kombinierten Kegel- und Planflächenverspannung ein Lösen der Teilelemente im Bereich der Trennstelle nur mit einem gewissen Kraftaufwand möglich ist.

Der Erfindung liegt daher die Aufgabe zugrunde, die bekannte Trennstelle der eingangs angegebenen Art dahingehend zu verbessern, dass mit den gemeinsamen Betätigungsmitteln eine radiale und dennoch radialkraftfreie Einspannung und Lösung der Teilelemente möglich ist.

Zur Lösung dieser Aufgabe wird die in dem Patentanspruch 1 angegebene Merkmalskombination vorgeschlagen. Vorteilhafte Ausgestaltungen und Weiterbildungen der Erfindung ergeben sich aus den abhängigen Ansprüchen.

Die erfindungsgemäße Lösung geht vor allem von dem Gedanken aus, dass die Spannelemente mit zusätzlichen Auswurfpartien versehen sind, die beim Lösen des Betätigungsmittels aus der Spannstellung unter Ausübung einer in Auswurfrichtung des Kupplungsteils wirkenden Axialkraft gegen eine des Spannelemente zugewandte Wirkfläche des Zugbolzens anschlagen, wobei die zugbolzenseitige Wirkfläche und/oder die spannelementseitigen Auswurfpartien mit mindestens einem drehend gelagerten Wälzkörper bestückt sein kann. Die Wälzkörper sorgen dafür, dass die Kraftübertragung auch beim Auswurfvorgang weitgehend reibungsfrei und damit radialkraftfrei erfolgen kann. Die Wälzkörper können kugelförmig, tonnenförmig oder zylindrisch ausgebildet sein.

Eine bevorzugte Ausgestaltung der Erfindung sieht vor, dass die zugbolzenseitige Wirkfläche einen Innenkonus bildet und dass die Spannelemente eine beim Lösevorgang gegen den Innenkonus anschlagende, auf diesem mit den Wälzelementen radial auflaufende Auswurfpartie aufweisen. Die Auswurfpartien können in Form je eines Vorsprungs, einer Schrägfläche an den Spannelementen angeformt oder durch die Wälzelemente gebildet sein.

Eine weitere Verbesserung der radialkraftfreien Kraftübertragung beim Spann- und Lösevorgang wird dadurch erzielt, dass die Spannelemente in einer Radialführung des Grundkörpers schwimmend geführt sind. Die Betätigungsmittel sind dabei zweckmäßig als Differentialschraube ausgebildet, die je einen in die beiden Spannelemente eingreifenden, mit gegenläufigen Steigungen versehenen Gewindeabschnitt aufweisen. Vorteilhafterweise sind im ersten Teilelement Anschläge angeordnet, die den Bewegungsweg der Spannelemente beim Lösevorgang begrenzen. Die Anschläge können dabei durch mit ihrem Kopf in den Bewegungsweg der Spannelemente eingreifende Kopfschrauben ausgebildet sein.

Eine weitere bevorzugte Ausgestaltung der Erfindung sieht vor, dass in einem Zwischenbereich zwischen der Stirnfläche bzw. der Planfläche einerseits und der konischen Aufnahme- oder Zapfenfläche andererseits je eine Drehmitnahmepartie angeordnet ist, die als zueinander komplementäre Mehrkantflächen ausgebildet sein können.

Eine weitere bevorzugte Ausgestaltung der Erfindung sieht vor, dass die als Differentialschraube ausgebildeten Betätigungsmittel außerhalb des den Zugbolzen aufnehmenden Teils die Spannelemente durchdringt und dass die Querabmessung der Spannelemente im Bereich der Betätigungsmittel größer als im Bereich der den Zugbolzen umfassenden Teile ist.

Gemäß einer vorteilhaften Ausgestaltung der Erfindung weisen die Teilelemente miteinander kommunizierende Kühlkanäle auf, wobei im ersten Teilelement mindestens ein um die Spannelemente herum zu einer Übergangsstelle geführter Zulaufkanal und im zweiten Teilelement mindestens ein an die Übergangsstelle angeschlossener Versorgungskanal für eine Mehrzahl von Schneidelementen angeordnet ist. Dabei kann nach einer ersten Ausführungsvariante die Übergangsstelle als mit dem mindestens einen Zulaufkanal und dem mindestens einen Versorgungskanal kommunizierender Ringkanal ausgebildet sein. Der Ringkanal kann dabei durch eine umlaufende Nut in einem der Teilelemente sowie durch eine die Nut übergreifende Trennfläche im anderen Teilelement begrenzt sein. Gemäß einer zweiten Ausführungsvariante ist die Übergangsstelle durch deckungsgleiche Übergangsöffnungen in den beiden Teilelementen gebildet, wobei die von den Übergangsöffnungen abgezweigten Versorgungskanäle im zweiten Teilelement im Bereich von Schneidelementen austreten können.

Gemäß einer dritten Ausführungsvariante ist ein in den Versorgungskanal eingreifendes Verteilerstück vorgesehen, das zu den einzelnen Schneidelementen führende, mit dem Versorgungskanal kommunizierende Verteilernuten enthält. Das Verteilerstück kann dabei einen in das zweite Teilelement drehorientiert eingreifenden Steckzapfen aufweisen.

Die Erfindung bezieht sich des Weiteren auf ein drehendes Werkzeugsystem für den Einsatz in Werkzeugmaschinen, das aus zwei Teilelementen besteht, die an einer Trennstelle der vorstehend beschriebenen Art miteinander verbunden sind. Das erste Teilelement kann dabei als Maschinenspindel, Adapterstück oder Werkzeughalter ausgebildet sein, während das zweite Teilelement zweckmäßig als Werkzeugkopf ausgebildet ist.

Im Folgenden wird die Erfindung anhand der in der Zeichnung in schematischer Weise dargestellten Ausführungsbeispiele näher erläutert. Es zeigen
- Fig. 1a: bis c eine Seitenansicht und zwei Längsschnitte einer Trennstelle eines Werkzeugsystems mit axialem Zugbolzen und radial betätigbarem Betätigungsmechanismus;
- Fig. 1d: bis f zwei Seitenansichten und eine schaubildliche Darstellung der Spannelemente des Betätigungsmechanismus nach Fig. 1a bis c;
- Fig. 2a: bis c Darstellungen entsprechend Fig. 1a bis c für ein weiteres Ausführungsbeispiel einer Trennstelle eines Werkzeugsystems mit axialem Zugbolzen;
- Fig. 2d: bis f zwei Seitenansichten und eine schaubildliche Darstellung der Spannelemente des Betätigungsmechanismus gemäß Fig. 2a bis c;

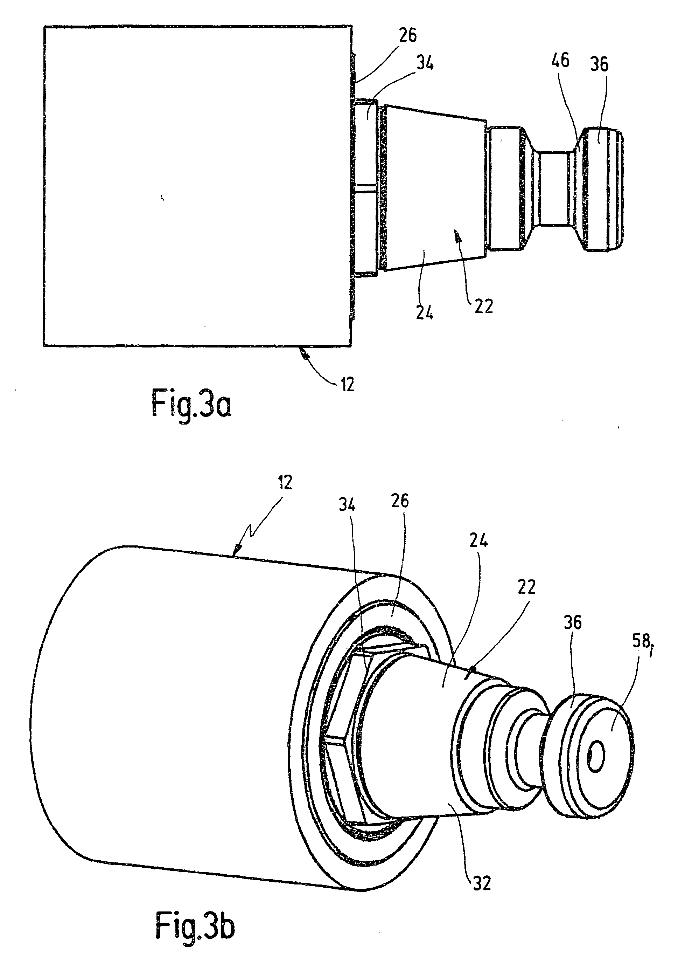

- Fig. 3a: und b eine Seitenansicht und eine schaubildliche Darstellung des Werkzeugkopfs nach Fig. 1a bis c;
- Fig. 4a: und b zwei an einer Trennstelle miteinander verbindbare Teilelemente eines Werkzeugsystems mit integrierter Kühlmittelübergabe;
- Fig. 4c: und d eine Seitenansicht der gekuppelten Teilelemente sowie eine Seitenansicht des ersten Teilelements des Werkzeugsystems nach Fig. 4a und b mit angedeuteten Kühlmittelkanälen;
- Fig. 4e: eine Untenansicht des zweiten Teilelements nach Fig. 4a;
- Fig. 4f: eine Darstellung entsprechend Fig. 4e mit eingezeichneten Kühlmittelkanälen;
- Fig. 5a: und b zwei an einer Trennstelle miteinander verbindbare Teilelemente eines Werkzeugsystems mit gegenüber Fig. 4 abgewandelter Kühlmittelübergabe;
- Fig. 5c: und d eine Seitenansicht des gekuppelten Werkzeugsystems und des ersten Teilelements des Werkzeugsystems mit eingezeichneten Kühlmittelkanälen;
- Fig. 5e: eine Untenansicht des zweiten Teilelements nach Fig. 5a;
- Fig. 5f: eine Darstellung entsprechend Fig. 5e mit eingezeichneten Kühlmittelkanälen;
- Fig. 5g: und h Schnitte nach den Schnittlinien A-A und B-B der Fig. 5e;
- Fig. 6a: und b zwei Teilelemente eines Werkzeugsystems mit gegenüber Fig. 4 und 5 abgewandelter Kühlmittelführung;
- Fig. 6c: und d Seitenansichten der gekuppelten Teilelemente und des ersten Teilelements nach Fig. 6a und b mit eingezeichneten Kühlmittelkanälen;
- Fig. 6e: eine Untenansicht des zweiten Teilelements gemäß Fig. 6a;
- Fig. 6f: eine Darstellung entsprechend Fig. 6e mit eingezeichneten Kühlmittelkanälen;
- Fig. 6g: einen Schnitt entlang der Schnittlinien A-A der Fig. 6e;
- Fig. 6h: eine schaubildliche Stirnseitenansicht der miteinander gekuppelten Teilelemente nach Fig. 6a und b.

Bei den in der Zeichnung dargestellten Werkzeugsystemen handelt es sich um Rundlaufwerkzeuge für den Einsatz in Werkzeugmaschinen, die beispielhaft als Reibwerkzeuge ausgebildet sind. Die Werkzeugsysteme bestehen im Wesentlichen aus einem ersten Teilelement 10, das bei dem gezeigten Ausführungsbeispiel als Werkzeughalter oder Maschinenspindel ausgebildet ist, einem zweiten Teilelement 12, das beispielhaft als Werkzeugkopf ausgebildet ist. Die beiden Teilelemente 10,12 sind an einer Trennstelle 14 lösbar miteinander verbunden. Außerdem findet an der Trennstelle 14 eine Kühlmittelübergabe vom ersten zum zweiten Teilelement 10,12 statt.

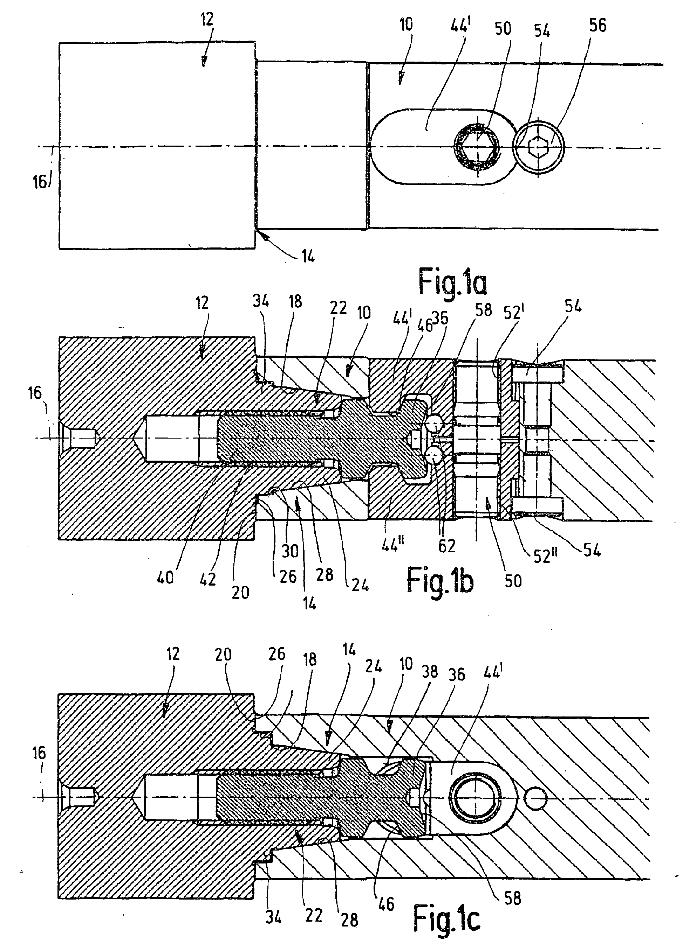

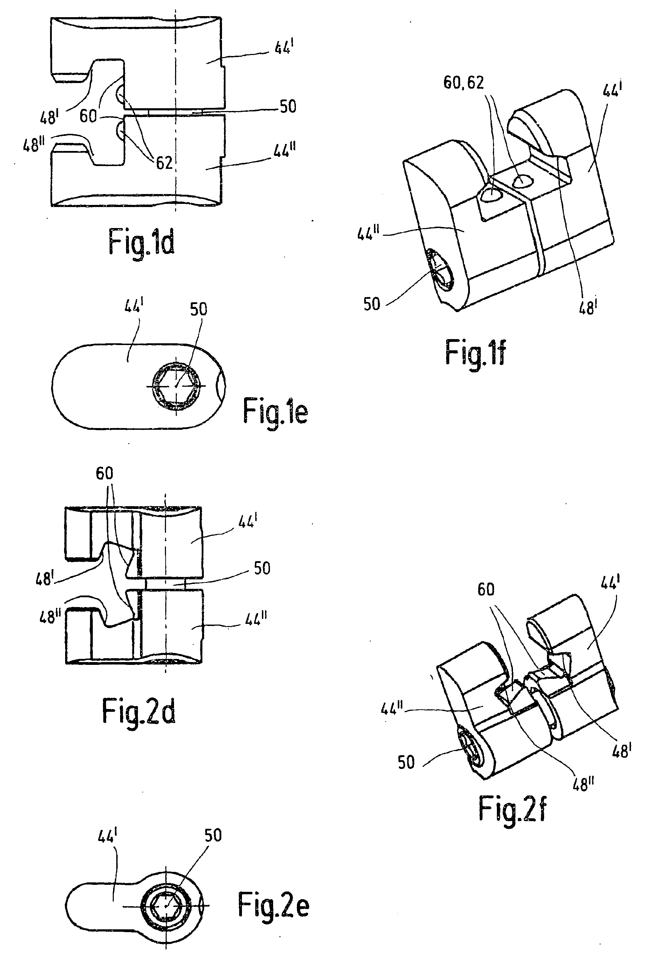

Die Trennstelle 14 weist eine am ersten Teilelement 10 angeordnete, zur Drehachse 16 des Werkzeugsystems koaxiale Aufnahme 18 auf, die nach außen hin von einer ringförmigen Stirnfläche 20 begrenzt ist. Zur Trennstelle 14 gehört ferner die am zweiten Teilelement 12 angeordnete Kupplungspartie 22, die einen Kupplungszapfen 24 sowie eine zur ringförmigen Stirnfläche 20 des ersten Teilelements 10 weisende, in gekuppeltem Zustand gegen diese anliegende ringförmige Planfläche 26 aufweist. Die Aufnahme 18 weist in ihrem Inneren eine konische Aufnahmepartie 28 und eine zwischen der konischen Aufnahmepartie 28 und der Stirnfläche 20 angeordnete, als Mehrkantfläche ausgebildete Drehmitnahmepartie 30 auf, während der Kupplungszapfen eine zur konischen Aufnahmepartie 28 komplementäre Kegelfläche 32 sowie eine zwischen der Kegelfläche 32 und der Planfläche 26 angeordnete, zur Drehmitnahmepartie 30 komplementäre, mehrkantige Drehmitnehmerpartie 34 aufweist. Am freien Ende des Kupplungszapfens 24 steht ein Zugbolzen 36 axial über und greift im montierten Zustand in einen sich an die Aufnahme 18 anschließenden Hohlraum 38 des ersten Teilelements ein. Der Zugbolzen 36 ist mit einem axial überstehenden Gewindeschaft 40 in eine Gewindebohrung 42 des zweiten Teilelements eingedreht und dort starr befestigt. Die Trennstelle 14 weist außerdem Spannmittel 44 zum gegenseitigen Verspannen der Teilelemente 10,12 auf, die zwei im Bereich des Hohlraums 38 im ersten Teilelement 10 radial geführte Spannelemente 44',44" aufweist, die einander bezüglich der Drehachse 16 gegenüberliegend angeordnet sind und in der in Fig. 1b und c gezeigten Spannstellung eine zur Drehachse 16 konzentrische Konuspartie 46 des Zugbolzens 36 untergreifende Keilflächen 48',48" tragen. Die Spannelemente 44',44" stehen in Wirkverbindung mit gemeinsamen Betätigungsmitteln 50, die zwischen einer Lösestellung und einer Spannstellung verstellbar sind. Die Betätigungsmittel 50 sind als Differentialschraube ausgebildet, die je einen in die beiden Spannelemente 44',44" eingreifenden, mit gegenläufigen Steigungen versehenen Gewindeabschnitt 52',52" aufweisen. Im ersten Teilelement 10 sind außerdem Anschläge 54 angeordnet, die den Bewegungsweg der Spannelemente 44',44" beim Lösevorgang begrenzen. Die Anschläge 54 sind dabei durch den Kopf jeweils einer in den Bewegungsweg der Spannelemente 44',44" eingreifenden Kopfschraube 56 gebildet.

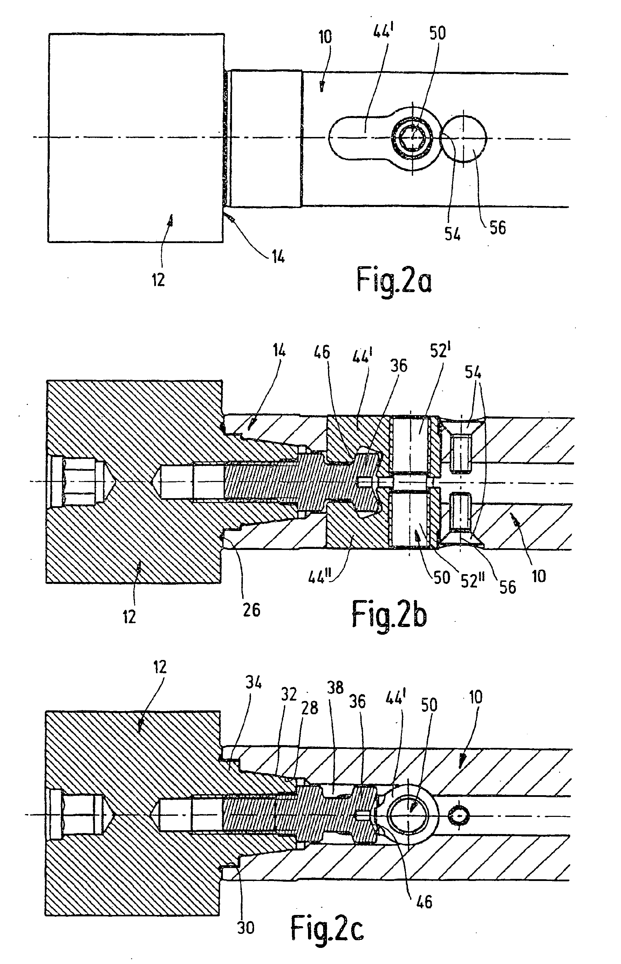

Eine Besonderheit der Erfindung besteht darin, dass die Spannelemente 44',44" mit Auswurfpartien 58 versehen sind, die beim Lösen der Spannelemente aus ihrer Spannstellung mit Hilfe der Differentialschraube 50 unter Ausübung einer in Auswurfrichtung des Kupplungsteils 22 wirkenden Axialkraft gegen eine den Spannelementen zugewandte Wirkfläche 58 des Zugbolzens 36 anschlagen. Die zugbolzenseitige Wirkfläche ist bei beiden Ausführungsformen nach Fig. 1a bis c und Fig. 2a bis c als Innenkonus ausgebildet. Bei dem Ausführungsbeispiel nach Fig. 1a bis c sind im Bereich der spannelementseitigen Auswurfpartien 60 kugelförmige Wälzkörper 62 drehbar gelagert. Beim Lösevorgang laufen die Wälzkörper 62 auf der konischen Wirkfläche 58 des Zugbolzens 36 auf, so dass das Kupplungsteil 22 zusammen mit dem zweiten. Teilelement 12 aus der Aufnahme 18 herausgedrückt wird. Sobald die Spannelemente 44',44" weit genug auseinander stehen, kann das zweite Teilelement 12 mit seinem Zugbolzen 36 durch die Lücke zwischen den Spannelementen 44',44" aus der Aufnahme 18 herausgezogen werden. Zum Einführen müssen die beiden Spannelemente 44,44' ebenfalls weit genug auseinander stehen, damit der Zugbolzen 36 durch die Lücke hindurch passt und beim anschließenden Spannvorgang von den Keilflächen 48',48" an der Konuspartie 46 erfasst werden kann. Die mit den Wälzkörpern 62 bestückten Spannelemente 44',44" sind in den Fig. 1d bis f separat herausgezeichnet.

Das in Fig. 2a bis c gezeigte Ausführungsbeispiel ist für kleinere Durchmesser des Werkzeugsystems bestimmt. Je kleiner die Abmessungen sind, um so schwieriger ist es, die Wälzkörper 62 in den Spannelementen 44',44" unterzubringen. Deshalb sind dort als Auswurfpartien anstelle der Wälzkörper Schrägflächen 64 vorgesehen, die auf der konischen Wirkfläche 98 beim Lösevorgang auflaufen und das Kupplungsteil 22 aus der Aufnahme 18 auswerfen. Die schlankere Bauweise der Spannelemente erlaubt es dort, dass die Querabmessung der Spannelemente 44',44" im Bereich der sie durchdringenden Differentialschraube 50 größer ist als im Bereich der den Zugbolzen 36 umfassenden Teile (vgl. insbesondere Fig. 2a und e).

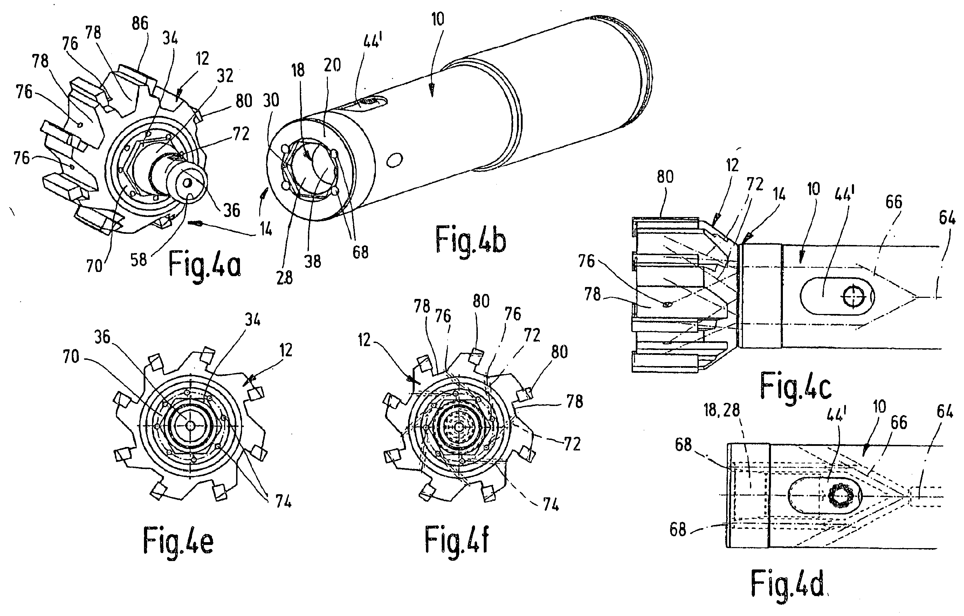

Eine weitere Besonderheit der Erfindung besteht in der Führung der Kühlmittelkanäle im Bereich der Trennstelle 14. Drei Ausführungsvarianten für die Kühlmittelführung finden sich in den Figurengruppen 4, 5 und 6. Auf der Seite des ersten Teilelements 10 stimmen die drei Ausführungsvarianten überein. Der zuführseitig zentral angeordnete Zuführkanal 64 wird zur Umfahrung der Spannelemente 44',44" in vier Teilkanäle 66 aufgeteilt, die an einer Übergangsstelle im Bereich der Stirnfläche 20 über vier Öffnungen 68 aus dem zweiten Teilelement austreten. Die drei Ausführungsvarianten nach Fig. 4, 5 und 6 unterscheiden sich lediglich in der Kanalführung auf der Seite des zweiten Teilelements.

Im Falle der Fig. 4a bis f wird die Übergangsstelle im Bereich der Planfläche 26 durch eine umlaufende Nut 70 gebildet, von der insgesamt acht schräg verlaufende Versorgungskanäle 72 von ihren Eintrittsöffnungen 74 im Bereich der Nut 70 zu ihren Austrittsöffnungen 76 im Bereich der Spannuten 78 in Richtung Schneiden 80 verlaufen. Aus Fig. 4f ist zu ersehen, dass die Versorgungskanäle in Umfangsrichtung im Abstand voneinander angeordnet sind und den gleichen Verlauf im Werkzeugkopf haben.

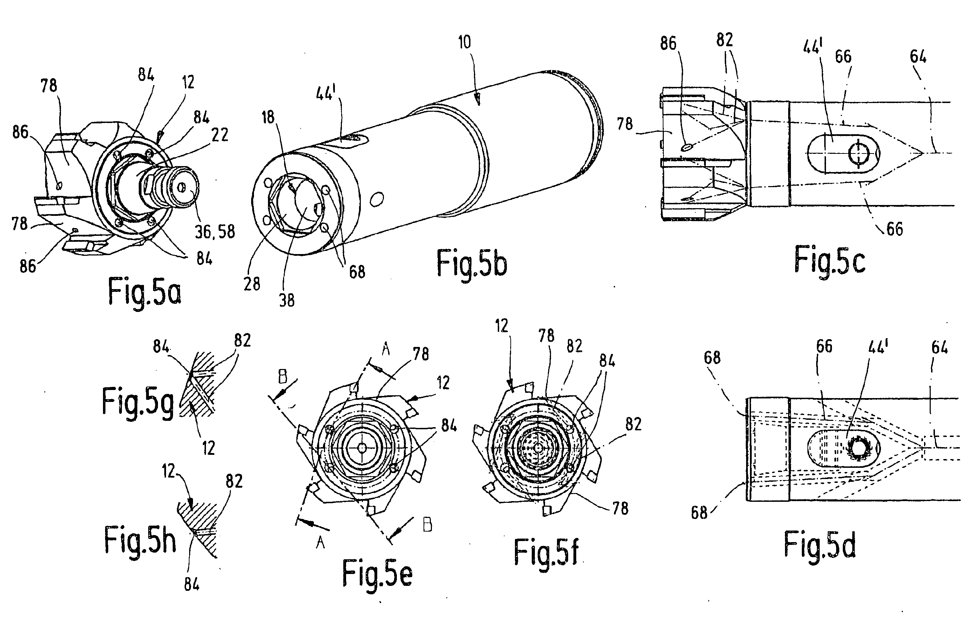

Bei dem Ausführungsbeispiel nach Fig. 5a bis h sind auf der Seite der Planfläche 26 vier Eintrittsöffnungen 84 vorgesehen, die mit den Austrittsöffnungen 68 des ersten Teilelements 10 deckungsgleich sind und die jeweils in zwei Versorgungskanäle 72 innerhalb des zweiten Teilelements 12 münden und von dort aus zu den Austrittsöffnungen 86 im Bereich der Spannuten 88 führen.

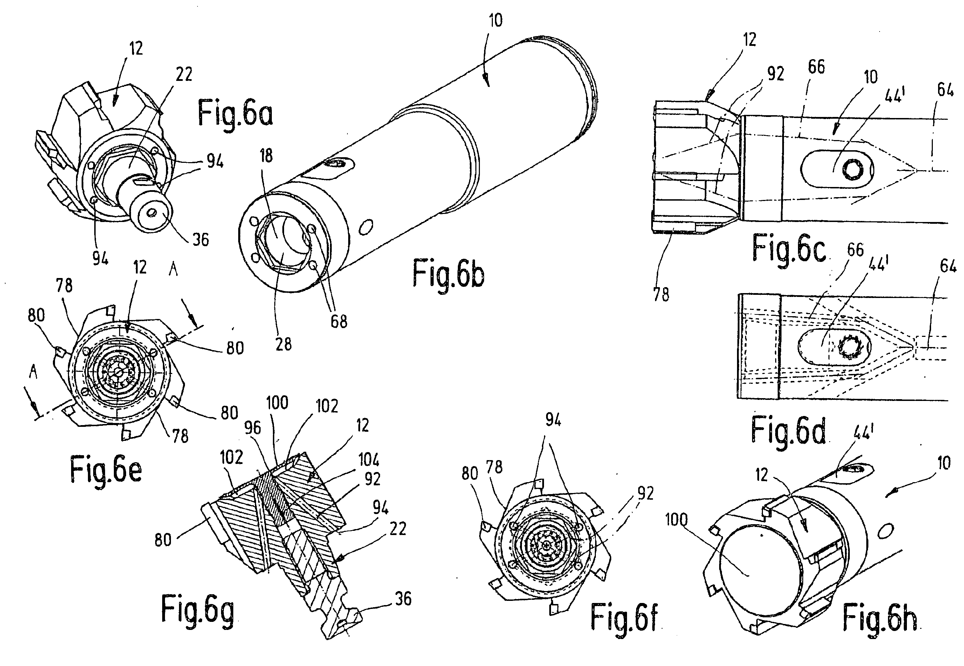

Bei dem Ausführungsbeispiel nach Fig. 6a bis h sind an der Übergangsstelle wiederum vier zu den Austrittsöffnungen 68 deckungsgleiche Eintrittsöffnungen 94 vorgesehen, die über Versorgungskanäle zu zentralen Austrittsöffnungen 96 im zweiten Teilelement 12 geführt sind und dort über ein stirnseitig eingesetztes Verteilerstück 100 und dort eingeformte Radialkanäle nach außen zu den Schneiden 80 geführt werden. Das Verteilerstück 100 das vorzugsweise aus Kunststoff besteht, weist einen Rastzapfen 102 auf, mit der es in eine stirnseitige Montageöffnung 104 des zweiten Teilelements 12 mit vorgegebener Drehorientierung eingesetzt ist.

Zusammenfassend ist folgendes festzuhalten: Die Erfindung bezieht sich auf eine Trennstelle 14 zwischen zwei Teilelementen 10,12 eines um eine Drehachse 16 drehenden Werkzeugsystems, insbesondere für den Einsatz in Werkzeugmaschinen. Die Trennstelle 14 umfasst eine an einem ersten Teilelement 10 angeordnete, zur Drehachse 16 koaxiale, zumindest teilweise konische Aufnahme 18, die von einer ringförmigen Stirnfläche 20 begrenzt ist. Das zweite Teilelement 12 trägt ein Kupplungsteil 22, das einen Kupplungszapfen 24 mit einer zur konischen Aufnahme 18 komplementäre Kegelfläche 32 und eine zur ringförmigen Stirnfläche 20 weisende, in gekuppeltem Zustand gegen diese anliegende ringförmige Planfläche 26 aufweist. Über das freie Ende des Kupplungszapfens 24 steht ein Zugbolzen 36 axial über, der in gekuppeltem Zustand in einen sich an die Aufnahme 18 anschließenden Hohlraum 38 eingreift. Weiter sind von der Außenseite her betätigbare Spannmittel zum gegenseitigen Verspannen der Teilelemente 10,12 vorgesehen, die zwei in im ersten Teilelement 10 radial geführte, am Zugbolzen 36 angreifende Spannelemente 44',44" aufweisen und die in Wirkverbindung mit gemeinsamen Betätigungsmitteln 50 stehen, durch die sie zwischen einer Lösestellung und einer Spannstellung verstellbar sind. Erfindungsgemäß sind die Spannelemente mit Auswurfpartien 60 versehen, die mit mindestens einem drehend gelagerten Wälzkörper 62 bestückt sein können.

## Patentansprüche

1. Drehendes Werkzeugsystem mit einer Drehachse (16) und mit einer Trennstelle zwischen zwei Teilelementen (10,12), insbesondere für den Einsatz in Werkzeugmaschinen, mit einer an einem ersten Teilelement (10) angeordneten, zur Drehachse (16) koaxialen, zumindest teilweise konischen Aufnahme (18), die von einer ringförmigen Stirnfläche (20) begrenzt ist, mit einem an einem zweiten Teilelement (12) angeordneten Kupplungsteil (22), das einen Kupplungszapfen (24) mit einer zur konischen Aufnahme (18) komplementären Kegelfläche (32) und eine zur ringförmigen Stirnfläche (20) weisende, in gekuppeltem Zustand gegen diese anliegende ringförmige Planfläche (26) aufweist, mit einem über das freie Ende des Kupplungszapfens (24) axial überstehen Zugbolzen (36), der in gekuppeltem Zustand in einen sich an die Aufnahme (18) anschließenden Hohlraum (38) eingreift, und mit von der Außenseite her betätigbaren Spannmitteln zum gegenseitigen Verspannen der Teilelemente (10,12), die zwei im ersten Teilelement (10) radial geführte Spannelemente (44',44") aufweisen, die einander bezüglich der Drehachse (16) gegenüberliegend angeordnet sind und in einer Spannstellung eine zur Drehachse (16) konzentrische Konuspartie (46) des Zugbolzens (36) untergreifende Keilflächen (48',48") tragen, und die in Wirkverbindung mit gemeinsamen Betätigungsmitteln (50) stehen, durch die sie zwischen einer Lösestellung und einer Spannstellung verstellbar sind, **dadurch gekennzeichnet, dass** die Spannelemente (44',44") mit Auswurfpartien (60) versehen sind, die beim Lösen der Spannelemente aus der Spannstellung unter Ausübung einer in Auswurfrichtung des Kupplungsteils (22) wirkenden Axialkraft gegen eine den Spannelementen (44',44") zugewandte Wirkfläche (58) des Zugbolzens (36) anschlagen.

2. Drehendes Werkzeugsystem nach Anspruch 1, **dadurch gekennzeichnet, dass** die zugbolzenseitige Wirkfläche (58) und/oder die spannelementseitigen Auswurfpartien (60) mit mindestens einem drehend gelagerten Wälzkörper (62) bestückt sind.

3. Drehendes Werkzeugsystem nach Anspruch 2, **dadurch gekennzeichnet, dass** der Wälzkörper (62) kugelförmig, tonnenförmig oder zylindrisch ausgebildet ist.

4. Drehendes Werkzeugsystem nach einem der Ansprüche 2 oder 3, **dadurch gekennzeichnet, dass** die zugbolzenseitige Wirkfläche (58) einen Innenkonus bildet und dass die Spannelemente (44',44") eine beim Lösevorgang gegen den Innenkonus anschlagende, auf diesem radial auflaufende Auswurfpartie (60) aufweisen.

5. Drehendes Werkzeugsystem nach einem der Ansprüche 1 bis 4, **dadurch gekennzeichnet, dass** die Auswurfpartien (60) in Form je eines Vorsprungs oder einer Schrägfläche an den Spannelementen (44',44") angeformt sind.

6. Drehendes Werkzeugsystem nach einem der Ansprüche 1 bis 5, **dadurch gekennzeichnet, dass** die Spannelemente (44',44") in Radialführungen des ersten Teilelements (10) schwimmend geführt sind.

7. Drehendes Werkzeugsystem nach einem der Ansprüche 1 bis 6, **dadurch gekennzeichnet, dass** die Betätigungsmittel (50) als Differentialschraube ausgebildet sind, die je einen in die beiden Spannelemente (44',44") eingreifenden, mit gegenläufigen Steigungen versehenen Gewindeabschnitt (52',52") aufweisen.

8. Drehendes Werkzeugsystem nach einem der Ansprüche 1 bis 7, **dadurch gekennzeichnet, dass** im ersten Teilelement (10) Anschläge (54) angeordnet sind, die den Bewegungsweg der Spannelemente (44',44") beim Lösevorgang begrenzen.

9. Drehendes Werkzeugsystem nach Anspruch 8, **dadurch gekennzeichnet, dass** die Anschläge (54) durch mit ihrem Kopf in den Bewegungsweg der Spannelemente eingreifende Kopfschrauben (56) gebildet sind.

10. Drehendes Werkzeugsystem nach einem der Ansprüche 1 bis 9, **dadurch gekennzeichnet, dass** in einem Zwischenbereich zwischen der Stirnfläche (20) bzw. Planfläche (26) einerseits und der konischen Aufnahme (18) bzw. Kegelfläche (32) andererseits eine Drehmitnahmepartie (30,34) angeordnet ist.

11. Drehendes Werkzeugsystem nach Anspruch 10, **dadurch gekennzeichnet, dass** die Drehmitnahmepartien (30,34) der Aufnahme (18) und des Kupplungszapfens (24) als zueinander komplementäre Mehrkantflächen ausgebildet sind.

12. Drehendes Werkzeugsystem nach einem der Ansprüche 1 bis 11, **dadurch gekennzeichnet, dass** die als Differentialschraube ausgebildeten Betätigungsmittel (50) außerhalb des den Zugbolzen (36) aufnehmenden Teils die Spannelemente (44',44") durchdringt und dass die Querabmessung der Spannelemente (44',44") im Bereich der Betätigungsmittel (50) größer als im Bereich der den Zugbolzen (36) umfassenden Teile ist.

13. Drehendes Werkzeugsystem nach einem der Ansprüche 1 bis 12, **dadurch gekennzeichnet, dass** die Teilelemente (10,12) miteinander kommunizierende Kühlkanäle aufweisen, wobei im ersten Teilelement (10) mindestens ein um die Spannelemente (44',44") herum zu einer Übergabestelle geführter Zulaufkanal (64,66) und im zweiten Teilelement (12) mindestens ein an die Übergabestelle angeschlossener Versorgungskanal (72,82,92) für eine Mehrzahl von Schneidelementen (80) angeordnet ist.

14. Drehendes Werkzeugsystem nach Anspruch 13, **dadurch gekennzeichnet, dass** die Übergangsstelle als mit dem mindestens einen Zulaufkanal (64,66) und dem mindestens einen Versorgungskanal (72) kommunizierender Ringkanal (70) ausgebildet ist.

15. Drehendes Werkzeugsystem nach Anspruch 14, **dadurch gekennzeichnet, dass** der Ringkanal (70) durch eine umlaufende Nut in einem der Teilelemente (12) sowie durch eine die Nut übergreifende Trennfläche (20) im anderen Teilelement (10) begrenzt ist.

16. Drehendes Werkzeugsystem nach Anspruch 13, **dadurch gekennzeichnet, dass** die Übergangsstelle durch deckungsgleiche Übergangsöffnungen in den beiden Teilelementen (10,12) gebildet ist.

17. Drehendes Werkzeugsystem nach Anspruch 16, **dadurch gekennzeichnet, dass** die von den Übergangsöffnungen abgezweigten Versorgungskanäle (72,82,92) im zweiten Teilelement (12) im Bereich von Schneidelementen (80) austreten.

18. Drehendes Werkzeugsystem nach einem der Ansprüche 12 bis 17, **gekennzeichnet durch** ein in den Versorgungskanal (92) eingreifendes Verteilerstück (100), das zu den einzelnen Schneidelementen (80) führende, mit dem Versorgungskanal (92) kommunizierende Verteilernuten (102) enthält.

19. Drehendes Werkzeugsystem nach Anspruch 18, **dadurch gekennzeichnet, dass** das Verteilerstück (100) einen in das zweite Teilelement (12) mit vorgegebener Drehorientierung eingreifenden Steckzapfen (104) aufweist.

20. Drehendes Werkzeugsystem nach einem der Ansprüche 1 bis 19, **dadurch gekennzeichnet, dass** das erste Teilelement (10) als Maschinenspindel, Adapterstück oder Werkzeughalter ausgebildet ist, und dass das zweite Teilelement (12) als Werkzeugkopf ausgebildet ist.

## Claims

1. Rotary tool system having a rotational axis (16) and a joint between two sub-elements (10, 12), in particular for use in machine tools, comprising: an at least partially conical receiver (18), which is arranged on a first sub-element (10) and is coaxial with the rotational axis (16), and which is delimited by an annular end face (20); a coupling part (22), which is arranged on a second sub-element (12) and has a coupling pin (24) with a conical surface (32) which is complementary to the conical receiver (18), and has an annular plane surface (26) which faces towards the annular end face (20) and which, in the coupled state, bears against the latter; a tie bolt 36, which projects axially over the free end of the coupling pin (24) and which in the coupled state engages in a cavity (38) adjoining the receiver (18); and clamping means, which can be actuated from the outside, for the purpose of mutual clamping of the sub-elements (10, 12), which clamping means have two clamping elements (44', 44") routed radially in the first sub-element (10) which are arranged opposite each other relative to the rotational axis (16) and in a clamping position carry wedge surfaces (48', 48") which engage beneath a conical portion (46) of the tie bolt (36) that is concentric with the rotational axis (16), and which are operatively connected to common actuating means (50), which are adjustable between a release position and a clamping position, **characterized in that** the clamping elements (44', 44") are provided with ejector portions (60) which, in the releasing of the clamping elements from the clamping position, with the exertion of an axial force acting in the ejection direction of the coupling part (22), strike against an active surface (58) of the tie bolt (36) which faces towards the clamping elements (44', 44").

2. Rotary tool system according to Claim 1, **characterized in that** the active surface (58) on the tie bolt side and/or the ejector portions (60) on the clamping element side is/are equipped with at least one rotatably mounted rolling element (62).

3. Rotary tool system according to Claim 2, **characterized in that** the rolling elements (62) are realized in a spherical, barrel-shaped or cylindrical form.

4. Rotary tool system according to Claim 2 or 3,
**characterized in that** the active surface (58) on the tie bolt side constitutes an internal cone, and the clamping elements (44', 44") have an ejector portion (60) which, in the release operation, strikes against the internal cone and runs radially on the latter.

5. Rotary tool system according to any one of Claims 1 to 4, **characterized in that** the ejector portions (60) are formed, respectively, in the form of a projection or an inclined surface on the clamping elements (44', 44").

6. Rotary tool system according to any one of Claims 1 to 5, **characterized in that** the clamping elements (44', 44") are routed in a floating manner in radial guides of the first sub-element (10).

7. Rotary tool system according to any one of Claims 1 to 6, **characterized in that** the actuating means (50) are realized as a differential screw, respectively having a threaded portion (52', 52"), provided with contradirectional thread leads, which engage in the two clamping elements (44', 44").

8. Rotary tool system according to any one of Claims 1 to 7, **characterized in that** arranged in the first sub-element (10) are stops (54), which delimit the motion path of the clamping elements (44', 44") in the release operation.

9. Rotary tool system according to Claim 8, **characterized in that** the stops (54) are constituted by cap screws (56) which by means of their head engage in the motion path of the clamping elements.

10. Rotary tool system according to any one of Claims 1 to 9, **characterized in that** a rotary driving portion (30, 34) is arranged in an intermediate region between the end face (20) and the plane surface (26) on the one hand and between the conical receiver (18) and the conical surface (32) on the other hand.

11. Rotary tool system according to Claim 10, **characterized in that** the rotary driving portions (30, 34) of the receiver (18) and of the coupling pin (24) are realized as polygonal surfaces which are complementary to each other.

12. Rotary tool system according to any one of Claims 1 to 11, **characterized in that** the actuating means (50) realized as a differential screw extends through the clamping elements (44', 44") outside the part which receives the tie bolt (36), and the transverse dimension of the clamping elements (44', 44") in the region of the actuating means (50) is greater than in the region of the parts comprising the tie bolt (36).

13. Rotary tool system according to any one of Claims 1 to 12, **characterized in that** the sub-elements (10, 12) have cooling channels which communicate with each other, at least one intake channel (64, 66), routed around the clamping elements (44', 44") to a transfer location, being arranged in the first sub-element (10) and at least one supply channel (72, 82, 92), connected to the transfer location for a plurality of cutting elements (80), being arranged in the second sub-element (12).

14. Rotary tool system according to Claim 13, **characterized in that** the transition location is realized as an annular channel (70) communicating with the at least one intake channel (64, 66) and the at least one supply channel (72).

15. Rotary tool system according to Claim 14, **characterized in that** the annular channel (70) is delimited by a circumferential groove in one of the sub-elements (12) and by a parting surface (20) overlapping the groove in the other sub-element (10).

16. Rotary tool system according to Claim 13, **characterized in that** the transition location is constituted by congruent transition openings in the two sub-elements (10, 12).

17. Rotary tool system according to Claim 16, **characterized in that** the supply channels (72, 82, 92) branched-off from the transition openings emerge in the region of cutting elements (80) in the second sub-element (12).

18. Rotary tool system according to any one of Claims 12 to 17, **characterized by** a distributor piece (100) which engages in the supply channel (92) and which comprises distributor grooves (102) leading to the individual cutting elements (80) and communicating with the supply channel (92).

19. Rotary tool system according to Claim 18, **characterized in that** the distributor piece (100) has a plug-in pin (104) which engages in the second sub-element (12) with a predefined rotational orientation.

20. Rotary tool system according to any one of Claims 1 to 19, **characterized in that** the first sub-element (10) is realized as a machine spindle, an adapter piece or a tool holder, and the second sub-element (12) is realized as a tool head.

## Revendications

1. Système d'outil rotatif avec un axe de rotation (16) et avec un point de séparation entre deux éléments partiels (10, 12), à utiliser notamment dans des machines-outils, avec un logement (18) au moins partiellement conique, disposé sur un premier élément partiel (10) et coaxial à l'axe de rotation (16), logement qui est délimité par une face terminale annulaire (20), avec une partie d'accouplement (22), qui est disposée sur un deuxième élément partiel (12) et qui présente un tenon d'accouplement (24) doté d'une surface conique (32) complémentaire du logement conique (18), et une surface plane annulaire (26) dirigée vers la face terminale annulaire (20) et s'appliquant contre elle dans l'état accouplé, avec un boulon tirant (36), qui dépasse axialement de l'extrémité libre du tenon d'accouplement (24) et qui, dans l'état accouplé, s'engage dans une cavité (38) se raccordant au logement (18), et avec des moyens de serrage pouvant être actionnés depuis le côté extérieur pour assembler entre eux avec serrage les éléments partiels (10, 12), moyens qui présentent deux éléments de serrage (44', 44") guidés radialement dans le premier élément partiel (10), qui sont disposés en vis-à-vis relativement à l'axe de rotation (16) et portent des surfaces biaises (48', 48") s'engageant dans une position de serrage sous une partie de cône (46) du boulon tirant (36) qui est concentrique à l'axe de rotation (16), et qui sont fonctionnellement reliés à des moyens d'actionnement communs (50) par lesquels ils peuvent être déplacés entre une position de libération et une position de serrage, **caractérisé en ce que** les éléments de serrage (44', 44") sont pourvus de parties d'éjection (60) qui, lorsque les éléments de serrage sont libérés de la position de serrage, en exerçant une force axiale agissant dans la direction d'éjection de la partie d'accouplement (22), butent contre une surface active (58) du boulon tirant (36) qui est tournée vers les éléments de serrage (44', 44").

2. Système d'outil rotatif selon la revendication 1, **caractérisé en ce que** la surface active (58) du côté du boulon tirant et/ou du côté des parties d'éjection (60) des éléments de serrage sont équipées d'au moins un élément roulant (62) monté rotatif.

3. Système d'outil rotatif selon la revendication 2, **caractérisé en ce que** l'élément roulant (62) est réalisé en forme de bille, de tonneau ou cylindrique.

4. Système d'outil rotatif selon l'une des revendications 2 ou 3, **caractérisé en ce que** la surface active (58) du côté du boulon tirant forme un cône intérieur, et **en ce que** les éléments de serrage (44', 44") présentent une partie d'éjection (60) qui, lors de l'opération de libération, bute contre le cône intérieur et monte radialement sur ce dernier.

5. Système d'outil rotatif selon l'une des revendications 1 à 4, **caractérisé en ce que** les parties d'éjection (60) sont formées sur les éléments de serrage (44', 44") sous la forme respective d'une saillie ou d'une surface biaise.

6. Système d'outil rotatif selon l'une des revendications 1 à 5, **caractérisé en ce que** les éléments de serrage (44', 44") sont guidés en montage flottant dans des guides radiaux du premier élément partiel (10).

7. Système d'outil rotatif selon l'une des revendications 1 à 6, **caractérisé en ce que** les moyens d'actionnement (50) sont réalisés sous forme de vis différentielles, qui présentent respectivement une partie filetée (52', 52") pourvue de pas de filetage en sens contraires, s'engageant dans les deux éléments de serrage (44', 44").

8. Système d'outil rotatif selon l'une des revendications 1 à 7, **caractérisé en ce que** des butées (54) sont disposées dans le premier élément partiel (10), qui limitent le parcours de déplacement des éléments de serrage (44', 44") lors de l'opération de libération.

9. Système d'outil rotatif selon la revendication 8, **caractérisé en ce que** les butées (54) sont formées par des vis à tête (56) s'engageant par leur tête dans le parcours de déplacement des éléments de serrage.

10. Système d'outil rotatif selon l'une des revendications 1 à 9, **caractérisé en ce qu'**une partie d'entraînement en rotation (30, 34) est disposée dans une région intermédiaire respectivement entre la face terminale (20) ou la surface plane (26) d'une part, et le logement conique (18) ou la surface conique (32) d'autre part.

11. Système d'outil rotatif selon la revendication 10, **caractérisé en ce que** les parties d'entraînement en rotation (30, 34) du logement (18) et du tenon d'accouplement (24) sont réalisées sous forme de surfaces polygonales mutuellement complémentaires.

12. Système d'outil rotatif selon l'une des revendications 1 à 11, **caractérisé en ce que** le moyen d'actionnement (50) réalisé sous forme de vis différentielle traverse les éléments de serrage (44', 44") en dehors de la partie recevant le boulon tirant (36), et **en ce que** la dimension transversale des éléments de serrage (44', 44") est plus grande dans la région du moyen d'actionnement (50) que dans la région des parties entourant le boulon tirant (36).

13. Système d'outil rotatif selon l'une des revendications 1 à 12, **caractérisé en ce que** les éléments partiels (10, 12) présentent des canaux de refroidissement communiquant entre eux, sachant qu'au moins un canal d'amenée (64, 66) dirigé autour des éléments de serrage (44', 44") vers un point de transfert est disposé dans le premier élément partiel (10), et qu'au moins un canal d'alimentation (72, 82, 92) pour une pluralité d'éléments coupants (80), raccordé au point de transfert, est disposé dans le deuxième élément partiel (12).

14. Système d'outil rotatif selon la revendication 13, **caractérisé en ce que** le point de transition est réalisé sous forme de canal annulaire (70) communiquant avec le canal d'amenée au moins unique (64, 66) et avec le canal d'alimentation au moins unique (72).

15. Système d'outil rotatif selon la revendication 14, **caractérisé en ce que** le canal annulaire (70) est délimité par une rainure entourante dans un (12) des éléments partiels, et par une surface de séparation (20) chevauchant la rainure dans l'autre élément partiel (10).

16. Système d'outil rotatif selon la revendication 13, **caractérisé en ce que** le point de transition est formé par des ouvertures de transition coïncidentes dans les deux éléments partiels (10, 12).

17. Système d'outil rotatif selon la revendication 16, **caractérisé en ce que** les canaux d'alimentation (72, 82, 92) du deuxième élément partiel (12) qui bifurquent des ouvertures de transition débouchent dans la région d'éléments coupants (80).

18. Système d'outil rotatif selon l'une des revendications 12 à 17, **caractérisé par** un élément distributeur (100) qui s'engage dans le canal d'alimentation (92) et qui contient des rainures distributrices (102) communiquant avec le canal d'alimentation (92) et menant aux éléments coupants individuels (80).

19. Système d'outil rotatif selon la revendication 18, **caractérisé en ce que** l'élément distributeur (100) présente un tenon à emboîtement (104) qui s'engage dans le deuxième élément partiel (12) avec une orientation de rotation prédéfinie.

20. Système d'outil rotatif selon l'une des revendications 1 à 19, **caractérisé en ce que** le premier élément partiel (10) est réalisé sous forme de broche principale, d'élément adaptateur ou de porte-outil, et **en ce que** le deuxième élément partiel (12) est réalisé sous forme de tête d'outil.
